# FASCICULE DE BREVET EUROPEEN

(11) **EP 3 087 031 B1**
(45) Date de publication et mention de la délivrance du brevet: **19.09.2018**
(21) Numéro de dépôt: 14833172.1
(22) Date de dépôt: 23.12.2014
(51) Int. Cl.: C01C 1/04, B01J 19/24, B01J 8/02

(54) **CONVERTISSEUR D'AMMONIAC COMPORTANT UNE PAROI TUBULAIRE INTERNE**
AMMONIAKKONVERTER MIT ROHRFÖRMIGER INNENWAND
AMMONIA CONVERTER COMPRISING A TUBULAR INNER WALL

(30) Priorité: 26.12.2013 FR 1303138
(43) Date de publication de la demande: 02.11.2016
(73) Titulaire: Naderi, Abdol Hossein, 86800 Sevres Anxaumont (FR)
(72) Inventeur: Naderi, Abdol Hossein, 86800 Sevres Anxaumont (FR)
(74) Mandataire: Gendron, Vincent Christian
(86) Numéro de dépôt international: PCT/IB2014/002870
(87) Numéro de publication internationale: WO 2015/097538

(56) Documents cités:
- EP-A1- 0 376 000
- DE-A1- 2 166 659
- US-A- 4 971 771
- US-B1- 7 226 568

## Description

La présente invention concerne le domaine des réacteurs de synthèse d'ammoniac, appelés aussi convertisseurs d'ammoniac, qui consistent en des réacteurs catalytiques transformant un mélange gazeux (d'azote et d'hydrogène) en ammoniac sous l'action de catalyseurs. Elle concerne plus particulièrement les composants internes de réacteurs de synthèse verticaux.

Classiquement un convertisseur d'ammoniac est un réacteur qui comprend un récipient doté d'une enveloppe externe qui forme la coque du récipient et d'une enveloppe interne, appelée cylindre intérieur, placée à l'intérieur de l'enveloppe externe de manière concentrique par rapport à l'axe central longitudinal du réacteur et de telle sorte qu'il existe un espace ménagé entre les deux enveloppes utilisé pour la circulation de gaz. Un tel convertisseur peut comporter plusieurs lits catalytiques fonctionnant à différentes températures, disposés espacés dans l'enveloppe interne. Les réactions catalytiques ont lieu à de hautes températures et sous de hautes pressions.

Dans le cas d'un convertisseur d'ammoniac vertical, un mélange gazeux d'azote et d'hydrogène est injecté en partie basse d'un récipient vertical et monte dans l'espace entre les deux enveloppes externe et interne pour atteindre la partie haute du récipient où il est distribué dans l'enveloppe interne en étant dirigé à travers un échangeur de chaleur à tubes, dans un premier lit catalytique supérieur (situé le plus haut dans le récipient vertical). Le mélange gazeux peut arriver par d'autres conduites, qui peuvent être centrales et placées en bas et en haut du récipient, afin de gérer au mieux l'adéquation des températures des réactions catalytiques et des gaz. Le mélange gazeux traverse radialement ce premier lit pour réagir avec les particules de catalyseur de ce lit le convertissant en ammoniac, puis l'effluent gazeux sortant est dirigé vers un second lit catalytique, placé sous la zone catalytique de ce lit catalytique supérieur, qui est à une température légèrement inférieure à celle du premier lit. L'effluent traverse radialement ce nouveau lit catalytique pour réagir avec le catalyseur de ce lit, puis à nouveau le flux sortant est dirigé vers d'autres lits catalytiques intermédiaires le cas échéant jusqu'à atteindre et traverser le dernier lit catalytique situé le plus bas dans le récipient vertical. Ce procédé est connu en soi.

L'effluent gazeux à convertir traverse donc radialement plusieurs lits catalytiques, pour être transformé progressivement en ammoniac, gaz qui est conduit vers la sortie du réacteur qui se situe généralement en bas du récipient. L'ammoniac sera refroidi pour être stocké sous forme liquide ou utilisé sur place.

Certains convertisseurs peuvent toutefois ne comporter qu'un seul lit catalytique.

Chaque lit catalytique est disposé dans l'enveloppe interne, entre deux media filtrants qui ont pour fonction de retenir les particules de catalyseur tout en laissant diffuser les gaz. Les media filtrants sont généralement faits d'un tamis, perméable aux gaz et dont la taille des mailles est calibrée pour retenir les particules de catalyseur, associé à une tôle perforée qui assure une diffusion homogène de l'effluent gazeux. Ils sont de forme cylindrique, comme le sont aussi généralement les enveloppes du réacteur. Les media filtrants sont concentriques par rapport à l'axe central vertical du récipient, les lits catalytiques étant de forme torique et disposés autour de cet axe central. Le premier media filtrant, dit media filtrant externe, est situé à proximité de la paroi interne de la seconde enveloppe du réacteur, et le second media filtrant, dit media filtrant interne, est situé en zone centrale du réacteur.

L'espace interne au centre du réacteur est ménagé de manière à permettre la circulation des gaz descendants.

Un inconvénient de ces convertisseurs est la présence de deux enveloppes, d'autant que ces enveloppes sont épaisses. L'enveloppe externe est la plus épaisse, toutefois l'enveloppe interne, sans les autres composants internes, peut représenter à elle seule une masse d'environ plusieurs dizaines de tonnes, par exemple de l'ordre de 50 à 80 tonnes. Le poids élevé oblige à des manipulations fastidieuses pour construire de tels convertisseurs.

Un autre inconvénient de ces convertisseurs est l'installation de l'enveloppe interne et des autres composants internes. En effet l'enveloppe interne est généralement fabriquée par l'entreprise qui fournit les media filtrants et du fait de la complexité des différents composants internes de ladite enveloppe, tous ces composants internes doivent être installés chez ce fabricant, y compris les lits catalytiques car ces derniers n'ont pas de moyens d'accès des uns aux autres (pour accéder aux lits inférieurs il est nécessaire de démonter les lits supérieurs). L'enveloppe interne complète représente donc un poids élevé pouvant atteindre jusqu'à 150 tonnes, voire plus, et une hauteur qui peut atteindre 40 mètres. L'installation de l'enveloppe interne, munie de ces composants internes, dans le réacteur se fait donc sur site, sachant que l'enveloppe externe verticale qui la reçoit fait déjà de plus de 50 mètres de haut. L'installation demande la mise en oeuvre de moyens extrêmement coûteux.

Ces enveloppes sont par ailleurs constituées d'un métal spécifique qui doit résister notamment aux hautes températures et pressions, et également à la corrosion interne, tout particulièrement au pouvoir corrosif de l'hydrogène à haute température. Ces enveloppes sont donc lourdes et coûteuses.

Dans le document de brevet US4 971 771 A est décrit un convertisseur d'ammoniac comprenant une coque résistante à la pression et des tubes perforés verticaux disposés en couronne sur la paroi interne de ladite coque du convertisseur. Lesdits tubes sont de simple conduits fermés en leur partie inférieure et ouverts en leur partie supérieure, et ils présentent des perforations suivant leur face avant en contact avec les particules de catalyseur, leur face arrière étant étanche aux gaz. Le gaz à convertir entrant par le bas du convertisseur est dirigé vers un canal central l'acheminant en partie supérieure du réacteur, et d'où ledit gaz s'écoule vers le bas à partir desdits tubes perforés vers le(s) lit(s) catalytique(s). Lesdits tubes s'étendent sur toute la hauteur de la coque. Le réacteur présente un unique trou d'homme, situé au centre de la partie supérieure de sa coque.

Le but de l'invention est de fournir un convertisseur d'ammoniac à effluents dans le sens montant et descendant, allégé et aisé à construire.

A cette fin, l'invention propose de supprimer le cylindre interne qui forme l'enveloppe interne ainsi que le media filtrant cylindrique externe d'un convertisseur d'ammoniac et d'utiliser un système tubulaire à zones filtrantes spécifique formant une paroi tubulaire à double conduit, qui se dispose sur le pourtour de la paroi interne de l'enveloppe externe formant la coque unique du récipient du convertisseur. La partie tubulaire disposée contre la paroi interne de la coque forme des conduits à paroi étanche aux gaz qui acheminent l'effluent gazeux montant du bas vers le haut du réacteur. Les zones filtrantes à l'égard des particules de catalyseur, sont formées par des media filtrants situées sur la face avant desdits conduits de gaz et qui forment des conduits qui permettent la diffusion d'un effluent gazeux descendant pour le diriger dans un lit catalytique donné. Les media filtrants de ces zones filtrantes sont donc en contact avec les particules de catalyseur du lit catalytique donné, côté externe dudit lit. Plus spécifiquement, pour un lit catalytique donné, les particules de catalyseur sont retenues entre les media filtrants de ladite paroi tubulaire présents dans cette zone catalytique, et un media filtrant interne centré sur l'axe central longitudinal du récipient. L'effluent gazeux descendant entre dans les espaces existants entre les media filtrants de la paroi tubulaire et les conduits étanches au gaz, passe à travers ces media filtrants puis traverse radialement l'épaisseur du lit catalytique et sort du lit à travers le media filtrant interne.

L'invention fournit ainsi un convertisseur d'ammoniac vertical à lits catalytiques à flux radial, comprenant un récipient formé d'une coque externe et équipé d'une paroi tubulaire interne à double conduit pour acheminer des effluents dans le sens montant et dans le sens descendant, ladite paroi tubulaire étant faite d'une multitude d'éléments tubulaires verticaux disposés en couronne suivant le pourtour de la paroi interne de ladite coque externe, lesdits éléments tubulaires étant formés de tubes à paroi étanche aux gaz, ouverts en leurs extrémités inférieure et supérieure pour conduire un effluent à traiter dans le sens montant d'une chambre d'injection située en partie inférieure de ladite coque vers une chambre de distribution située en partie supérieure de ladite coque, tubes auxquels sont accolés des media filtrants sur la hauteur d'un lit catalytique, les media filtrants étant fermés en leur extrémité inférieure pour conduire et diffuser un effluent descendant dans le lit catalytique considéré. Lesdits media filtrants retiennent les particules de catalyseur sur la face externe du lit catalytique considéré. Chaque media filtrant est ouvert en son extrémité supérieure pour permettre l'entrée d'un effluent descendant alors qu'il est fermé en son extrémité inférieure pour amener cet effluent à diffuser radialement vers le lit de particules de catalyseur à travers sa face perméable aux gaz qui est en contact avec ledit lit catalytique. Cette face perméable à l'effluent s'oppose au passage des particules du lit catalytique vers l'espace entre le tube à paroi étanche et ledit media filtrant de l'élément tubulaire.

On entend par convertisseur d'ammoniac à lits catalytiques que le convertisseur peut comprendre qu'un seul lit catalytique ou plusieurs lits catalytiques.

Plus spécifiquement lorsque le convertisseur selon l'invention comprend plusieurs lits catalytiques, l'invention propose un convertisseur d'ammoniac dont le récipient est doté d'une coque externe et qui comporte une paroi tubulaire interne à double conduit pour acheminer des effluents gazeux dans le sens montant et descendant, ladite paroi tubulaire étant faite d'une multitude d'éléments tubulaires longitudinaux, placés sur le pourtour de la paroi interne de la coque, constitués de tubes et de media filtrants. Ces tubes se présentent sous forme de tronçons de tube à paroi étanche aux gaz, assemblés de façon étanche au gaz verticalement les uns à la suite des autres, chaque tronçon de tube ayant sensiblement la hauteur d'une zone catalytique, et par ailleurs chaque tronçon de tube étant muni, en sa face avant, face dirigée vers l'intérieur de la coque, d'un media filtrant qui lui est accolé sur la hauteur d'un lit catalytique, ledit media filtrant étant fermé en l'une de ses extrémités, qui est son extrémité inférieure dans un convertisseur vertical, l'autre extrémité (supérieure) étant ouverte.

Les tubes des éléments tubulaires présentent une paroi étanche aux gaz. Les tronçons de tube sont assemblés les uns à la suite des autres par des moyens de raccordement étanches de manière à former un tube dont les extrémités inférieure et supérieure sont ouvertes, l'extrémité inférieure étant située en bas du lit catalytique inférieur, raccordé à la chambre inférieure d'injection des gaz, et l'extrémité supérieure débouchant au-dessus du lit catalytique supérieur, dans une chambre supérieure de distribution des gaz.

Les tronçons de tubes sont de forme adaptée à épouser celle de la paroi interne de la coque, qui est généralement à section circulaire, la coque étant de forme cylindrique. La face du tronçon de tube disposée contre la paroi interne de la coque externe (soit la face arrière du tronçon de tube) présente un faible rayon de courbure en correspondance avec le rayon de courbure de la paroi de ladite coque externe. De préférence la face avant du tronçon de tube est convexe, la convexité étant dirigée vers l'intérieur du récipient. De préférence chaque tronçon de tube a une forme sensiblement semi-cylindrique, en demi-lune. De préférence le media filtrant qui lui est accolé est à section en forme de croissant.

Le media filtrant fixé sur chaque tronçon de tube est accolé par ses bords longitudinaux sur la face avant du tronçon de tube. Ce media filtrant présente une forme convexe, de convexité dirigée vers l'intérieur du récipient, qui crée un espace entre la paroi du tronçon de tube qui le supporte et la paroi du media, laissant entrer un fluide. Ce media filtrant est en général fait d'un tamis associé à une tôle perforée qui permet de contrôler la répartition de l'effluent qui va être diffusé dans le lit catalytique. Le tamis est disposé pour être directement en contact avec les particules du lit catalytique considéré afin d'assurer son rôle de rétention vis-à-vis desdites particules. De préférence le tamis est une crépine formée classiquement de fils métalliques profilés en V soudés par fusion sur des barres métalliques profilés en V. L'espacement entre les fils est inférieur à la taille des particules de catalyseur, afin que lesdites particules de catalyseur soient retenues. Une telle crépine est très résistante mécaniquement.

La paroi tubulaire est montée en traversant les zones catalytiques successives, la hauteur d'un lit catalytique déterminant la hauteur des media filtrants de la partie de paroi tubulaire respective de la zone catalytique. Une zone de raccordement étanche est prévue entre le tronçon d'un élément tubulaire pour une zone catalytique donnée et le tronçon suivant de la zone catalytique adjacente.

Selon un mode préféré de réalisation de l'invention, chaque zone catalytique est supportée par un disque support évidé en son centre pour laisser passer les éléments centraux du convertisseur, notamment les conduites centrales du convertisseur. Ce disque supporte en autre le lit catalytique, de forme torique, et la partie de paroi tubulaire interne respective de cette zone. De préférence le disque est fixé par son bord externe à la paroi interne de la coque externe. De préférence selon l'invention, chaque tronçon de tube muni de son media filtrant est fixé sur une lumière réalisée dans un plat dont la partie pleine obstrue l'extrémité inférieure dudit media filtrant. Le plat vient se positionner sur le pourtour dudit disque support de la zone catalytique. Pour une zone catalytique donnée les plats sont montés les uns à la suite des autres en couronne sur le pourtour du disque support de la dite zone.

De préférence les tronçons de tube sont disposés à équidistance les uns des autres pour une zone catalytique donnée.

De préférence selon l'invention, le convertisseur comprend une chambre d'injection située en partie inférieure de la coque externe qui comporte un dôme perforé permettant la diffusion homogène du fluide injecté et aidant à supporter la zone catalytique située au-dessus.

De préférence aussi selon l'invention, le convertisseur comprend une chambre de distribution située en partie supérieure de la coque externe qui comporte un cône supérieur concentrique par rapport au centre de la coque, supportant la bride de fermeture de tête et qui maintient un distributeur de fluide à traiter introduit préchauffé par une entrée en tête du récipient lors du démarrage du procédé. Ce fluide préchauffé facilite la mise en route de la réaction catalytique.

Pour un meilleur contrôle des échanges thermiques, une couche isolante thermiquement peut être installée entre la paroi avant des tronçons de tube face au media filtrant et/ou entre deux éléments tubulaires successifs. Dans le cas où il est souhaitable de réduire la température de la paroi de la coque du récipient, une couche isolante peut être installée entre les éléments tubulaires et la paroi intérieure de ladite coque.

Selon le principe de fonctionnement d'un convertisseur d'ammoniac réalisé conformément à l'invention, le mélange de gaz à convertir (azote-hydrogène) injecté dans la chambre d'injection en partie basse du récipient, monte dans les tubes étanches de la paroi interne tubulaire jusqu'à la zone de distribution située au-dessus du lit catalytique le plus haut, puis est dirigé selon un sens descendant à travers un échangeur de chaleur vers le lit catalytique supérieur. L'effluent gazeux sortant de ce lit catalytique est dirigé vers le lit catalytique suivant situé au-dessous et ainsi de suite. Au niveau de chaque lit catalytique, l'effluent gazeux descendant passe à travers le media filtrant accolé au tronçon de tube de la zone catalytique considérée, puis traverse radialement le lit catalytique où il réagit avec les particules du catalyseur pour être transformé au moins en partie en ammoniac, le flux sortant passant à travers le media filtrant interne.

Le principe de fonctionnement d'un convertisseur d'ammoniac conforme à l'invention sera plus amplement détaillé, lors de la description des figures annexées.

De préférence, selon l'invention, le media filtrant interne d'une zone catalytique donnée, est fait d'un tamis, retenant les particules du catalyseur, associé à une tôle perforée assurant la diffusion homogène de l'effluent gazeux qui sort du lit catalytique. En outre ce media filtrant interne est en général associé à un déflecteur qui dirige le flux gazeux sortant dudit media interne vers la partie centrale du récipient, notamment vers le haut d'un échangeur de chaleur central lorsqu'un tel échangeur est présent. Un tel déflecteur est constitué classiquement d'un tuyau cylindrique, non perforé, ouvert en son extrémité supérieure et fermé en son extrémité inférieure, disposé autour de l'axe central longitudinal du récipient, qui collecte le flux sortant du lit catalytique à travers le media filtrant interne et le dirige vers l'espace central du récipient.

Alternativement et avantageusement, l'invention propose, toujours dans le but d'alléger le convertisseur, d'associer le media filtrant interne à un nouveau déflecteur se disposant à l'intérieur dudit media filtrant, ce déflecteur présentant des canaux longitudinaux acheminant l'effluent gazeux qui sort du media filtrant interne vers l'intérieur du récipient. Un tel déflecteur se présente sous forme d'une tôle cannelée fermée sur elle-même, la tôle perforée du media filtrant interne étant interposée entre ladite tôle cannelée et le tamis dudit media filtrant interne. Ladite tôle perforée assure la diffusion uniforme du flux sortant sur toute la hauteur du lit catalytique. Les canaux longitudinaux de la tôle cannelée sont chacun délimité par deux plis consécutifs de la tôle cannelée.

Pour chaque zone catalytique, les extrémités inférieure et supérieure de l'ensemble formé par ledit déflecteur et le media filtrant interne sont fermées de manière étanche aux gaz, à l'exception d'ouvertures ménagées uniquement en haut de chaque canal pour permettre le passage du flux gazeux venant à travers le media filtrant vers le centre du récipient, en particulier vers la partie supérieure d'un éventuel échangeur de chaleur central. Ces ouvertures sont faites par découpe de la partie supérieure de la tôle cannelée. De préférence les extrémités supérieure et inférieure de l'ensemble sont fermées chacune par un anneau plat, en particulier par soudage. Dans le cas du lit catalytique inférieur, traversé en dernier par l'effluent gazeux, comme il n'y a pas lieu de diriger le flux vers un autre lit catalytique plus bas, il suffit de laisser s'écouler le flux gazeux converti (gaz ammoniac) dans les canaux vers le bas du récipient, donc soit seule l'extrémité supérieure de l'ensemble formé par le déflecteur et le media filtrant est obstruée soit aucun déflecteur n'est installé avec le media filtrant interne dans cette zone catalytique inférieure.

L'invention vise aussi un système tubulaire à double conduit pour former la paroi interne d'un récipient d'un convertisseur d'ammoniac à lits catalytique à flux radial. Ce système tubulaire comprend une pluralité de tronçons de tubes à paroi étanche aux gaz et de media filtrants, chaque tronçon de tube présentant une face à laquelle est accolée longitudinalement un media filtrant de forme convexe pour former un conduit, l'une des extrémités dudit media filtrant étant ouverte, l'autre extrémité dudit media filtrant étant fermée de manière étanche aux gaz. Le media filtrant ne s'étend sur pas sur la totalité de la longueur du tronçon de tube, sa hauteur est adaptée à la hauteur du lit catalytique correspondant. De préférence selon l'invention, la base de chacun desdits tronçons de tube est fixée sur une lumière ménagée dans un plat, l'extrémité dudit media filtrant se trouvant du côté de cette base étant obstruée par la partie pleine dudit plat. De préférence ces plats sont en outre usinés de manière à ce qu'ils puissent être disposés, par exemple par emboîtage, sur un disque support pour les assembler les uns à la suite des autres en couronne suivant le pourtour dudit disque. Des organes de raccord étanche sont prévus pour raccorder les tronçons d'un tube.

L'invention concerne aussi un procédé de fabrication d'un convertisseur d'ammoniac à zones catalytiques à flux radial, comportant un récipient présentant une coque externe, dans lequel on installe une paroi tubulaire telle que définie précédemment contre le pourtour de la paroi interne de ladite coque, ladite paroi tubulaire étant montée en raccordant de manière étanche successivement longitudinalement (selon l'axe longitudinal de la coque) les tronçons de tube de chaque élément tubulaire de la paroi, par zone catalytique.

Plus particulièrement, l'invention propose un procédé d'installation de composants internes d'un récipient d'un convertisseur d'ammoniac vertical comprenant des zones catalytiques à flux radial, le récipient comprenant une coque externe. Le procédé comprend des étapes selon lesquelles on installe ladite coque externe verticalement puis on monte une paroi tubulaire interne dans ladite coque, zone catalytique par zone catalytique, en utilisant le système tubulaire décrit précédemment.

Plus particulièrement selon l'invention, dans la coque externe on installe des disques supports des zones catalytiques, percés en leur partie centrale pour laisser passer les composants centraux du convertisseur, et comportant une ouverture (qui se ferme et s'ouvre réversiblement) permettant le passage d'un être humain (ouverture appelée « trou d'homme ») située dans la partie annulaire entre la paroi tubulaire interne et l'autre media filtrant dit media filtrant interne, on installe la partie de la paroi tubulaire interne à double conduit de la zone catalytique inférieure en fixant les tronçons de tube de ladite paroi, munis chacun de leur media filtrant respectif, sur le disque support de ladite zone catalytique, de manière à disposer lesdits tronçons de cette zone sur le pourtour dudit disque, les tronçons de tube étant dressés verticalement contre le pourtour de la paroi interne de la coque externe, les media filtrants de la paroi tubulaire étant tourné vers l'intérieur du récipient. On poursuit l'installation de la paroi tubulaire interne en installant de même successivement les tronçons de tube munis chacun de leur media filtrant de chaque zone catalytique en remontant vers la partie supérieure du récipient, les tronçons de tube d'une zone catalytique à l'autre étant raccordés de manière étanche par des moyens de raccordement annexes. De préférence, ces moyens de raccordement annexes assurent de plus la dilatation thermique verticale des tronçons. On utilise de préférence des manchons d'étanchéité.

La paroi tubulaire est donc montée de la zone catalytique inférieure vers la zone catalytique supérieure, directement dans la coque externe.

Avantageusement selon ledit procédé, les particules de catalyseur sont injectées dans chaque zone catalytique en passant par l'ouverture réservée au passage d'une personne, réalisée dans le disque support des zones catalytiques situées au-dessus. De même ces particules sont enlevées par les mêmes ouvertures.

L'invention sera maintenant plus complètement décrite dans le cadre de caractéristiques préférées et de leurs avantages, en faisant référence aux figures 1 à 10 dans lesquelles :
- la figure 1 représente schématiquement une vue en coupe longitudinale d'un convertisseur d'ammoniac incluant une paroi interne tubulaire conforme à l'invention ;
- la figure 2 représente schématiquement une vue partielle en grossissement de la figure 1 ;
- la figure 3 représente schématiquement une vue en coupe transversale suivant le plan III-III de la figure 1 ;
- la figure 4 représente schématiquement une vue en coupe transversale d'un élément tubulaire de la paroi tubulaire interne conforme à l'invention ;
- la figure 5 représente une vue partielle de la paroi tubulaire en vue de dessus;
- la figure 6 représente schématiquement en coupe transversale un convertisseur d'ammoniac incluant une paroi interne conforme à l'invention et un media filtrant interne associé à un déflecteur interne d'un effluent gazeux en tôle cannelée ;
- la figure 7 représente schématiquement en coupe longitudinale une vue du media filtrant interne associé à un déflecteur interne d'un effluent gazeux en tôle cannelée illustrés en figure 6;
- la figure 8 représente schématiquement en coupe transversale une vue partielle d'un media filtrant interne associé à un déflecteur interne d'un effluent gazeux en tôle cannelée illustrés en figures 6 à 7;
- la figure 9 représente schématiquement une vue partielle et en perspective du media filtrant interne associé au déflecteur illustrés en figures 6 à 8;
- la figure 10 représente schématiquement une vue partielle, en coupe transversale, de la paroi tubulaire selon l'invention munie d'une isolation thermique.

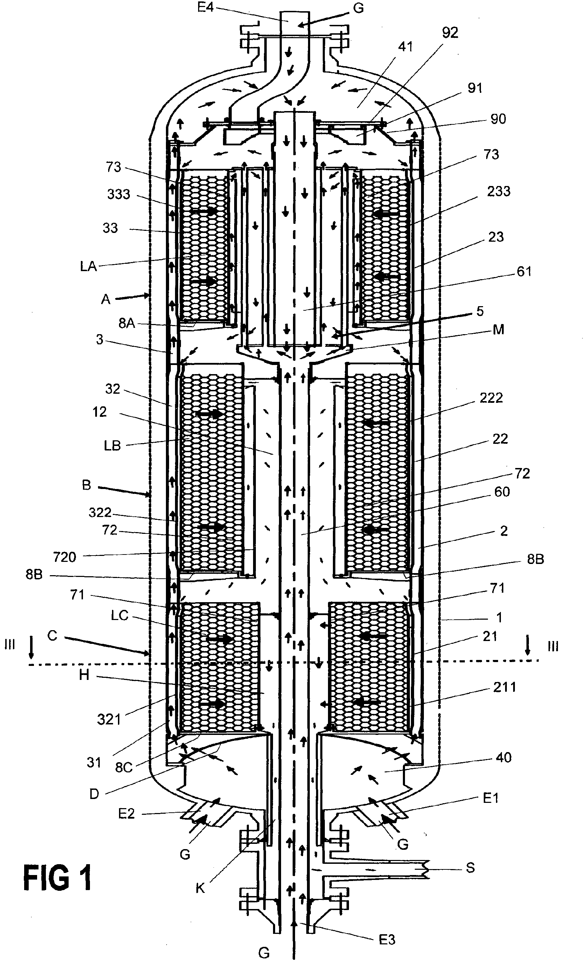

La figure 1 illustre schématiquement un convertisseur d'ammoniac de type vertical selon l'invention, vu en coupe longitudinale, qui comporte une paroi tubulaire interne conforme à l'invention.

Le convertisseur vertical comprend un récipient cylindrique doté d'une coque externe 1, de lits catalytiques, selon cet exemple de trois lits catalytiques supérieur LA, intermédiaire LB et inférieur LC, disposés espacés verticalement à l'intérieur du récipient, respectivement dans les zones catalytiques A, B, C. Les particules de catalyseur des lits catalytiques sont retenues entre des media filtrants pour chaque zone catalytique comme cela est explicité plus loin.

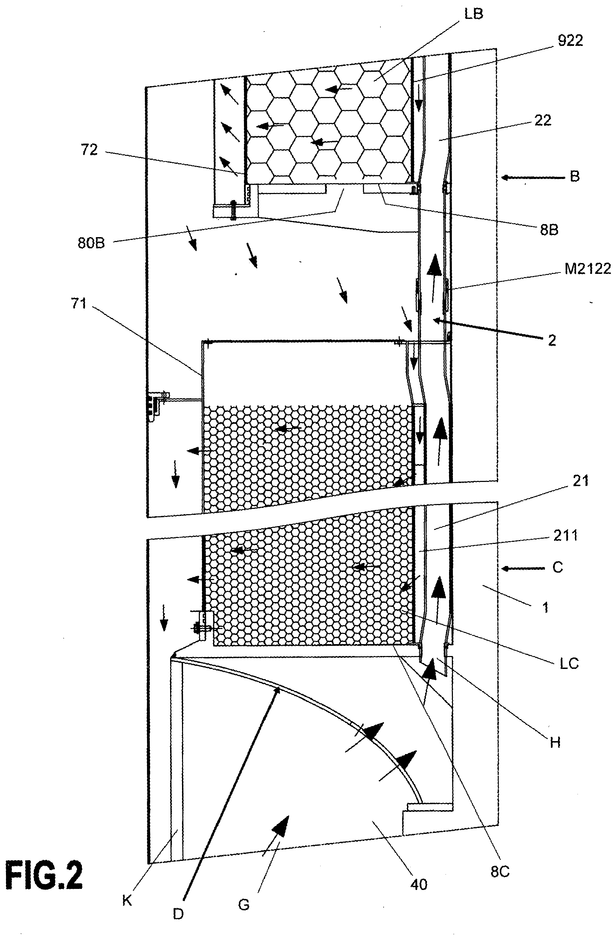

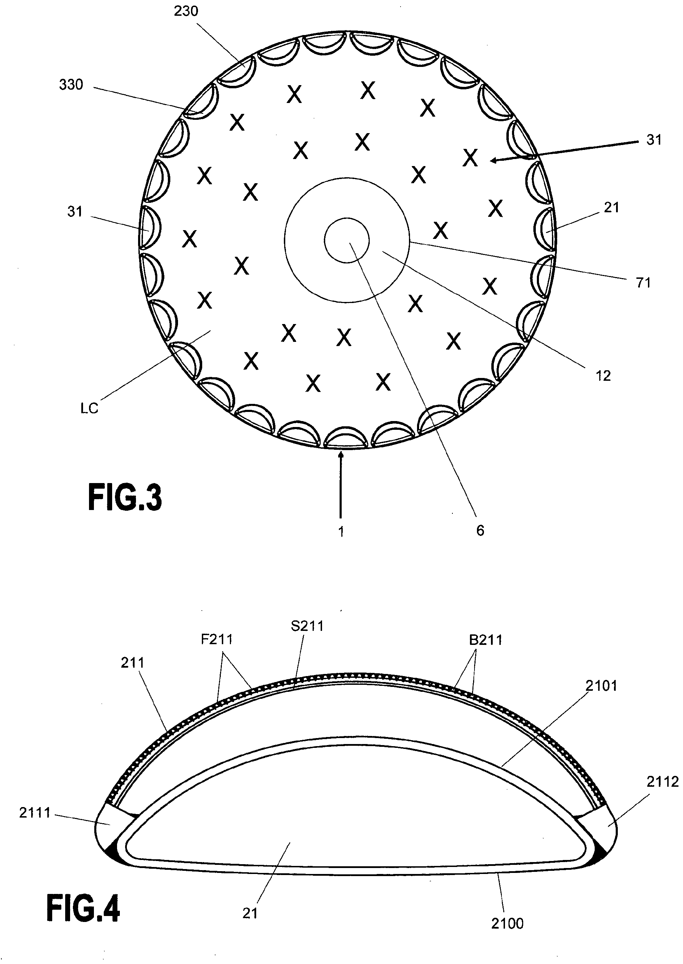

Le récipient du convertisseur comporte une paroi tubulaire interne constituée d'une pluralité d'éléments tubulaires disposés en couronne à équidistance les uns des autres contre le pourtour de la paroi interne de la coque 1. Comme illustré sur la figure 3 réalisée dans le plan de coupe III-III de la figure 1 au niveau de la zone catalytique C, chaque élément tubulaire est formé d'un tube muni de media filtrants. Chaque tube est formé de tronçons de tube comme cela est visible notamment sur les figures 1 et 2. Chaque tube, tel que le tube 2, visible sur ces figures, est formé de tronçons de tubes 21, 22, 23 respectifs des zones catalytiques C, B, A, assemblés les uns à la suite des autres, verticalement, par des jonctions rendues étanches aux gaz utilisant des manchons d'étanchéité M2122. De même le tube 3 visible sur la figure 1 est formé d'un assemblage de tronçons de tube 31, 32, 33.

Les tubes formant cette paroi tubulaire sont à paroi étanche au gaz, chacune de leurs extrémités étant ouverte. L'extrémité inférieure d'un tube débouche en partie inférieure du récipient, sous le lit catalytique inférieur LC, dans la chambre d'injection 40 du mélange gazeux (azote et hydrogène) à convertir alors que l'extrémité supérieure débouche au-dessus du lit catalytique supérieur LA, dans la chambre de distribution des gaz 41. Ces tubes permettent d'acheminer les mélanges de gaz (azote - hydrogène) injectés en bas du récipient du convertisseur vers le haut du récipient, de manière à ensuite traiter les effluents successivement dans les différents lits catalytiques selon un procédé en soi connu pour convertir un mélange azote-hydrogène en ammoniac.

L'élément tubulaire comprend en outre des media filtrants se présentant chacun selon cet exemple sous forme d'une crépine associée à une tôle perforée de diffusion de l'effluent, ladite crépine venant en contact des particules de catalyseur des lits catalytiques, suivant la face externe longitudinale de ces lits de forme torique. Le rôle de ces crépines est de laisser entrer les gaz dans le lit catalytique et de retenir les particules de catalyseurs à l'intérieur du lit.

Les particules de catalyseurs sont par ailleurs retenues sur la face longitudinale interne du lit catalytique par un autre média filtrant dit media filtrant interne, cylindrique, centré sur l'axe longitudinal central (axe vertical ici) du récipient du convertisseur, qui selon cet exemple se présente sous forme d'une crépine unique associée à une tôle perforée qui permet de contrôler la répartition de l'effluent diffusé vers l'intérieur du récipient.

La figure 4 illustre en coupe transversale partielle un élément tubulaire de la paroi interne du convertisseur conformément à l'invention, cette coupe montrant un tronçon de tube accolé d'un media filtrant. Selon cet exemple, le tronçon de tube 21 de la zone catalytique inférieure C, a une forme semi-cylindrique. Ce tronçon de tube présente une face arrière 2100, face venant en contact avec la paroi interne de la coque 1, dont le rayon de courbure est sensiblement égal à celui de la coque interne ; et à l'opposé une face avant 2101 plus bombée. A cette face bombée 2101, est accolé longitudinalement un media filtrant 211 qui présente également une face bombée. Ledit media filtrant se présente sous forme d'une crépine associée à une tôle perforée fixées par soudage sur des barres longitudinales 2100, 2112. Cette crépine est classiquement composée d'une pluralité de fils F221, de préférence à profils en V, disposés parallèles et espacés les uns des autres transversalement sur des barres support B211. Ces barres B211 sont cintrées pour donner la forme bombée à la crépine. Les fils sont soudés de préférence par la pointe du V sur les barres support. L'espace entre les fils est calculé pour faire obstruction au passage des particules de catalyseurs, il est donc inférieur à la taille des particules de catalyseurs d'un lit catalytique donné. Le media filtrant comporte en outre une tôle perforée S211 qui assure la diffusion homogène de l'effluent gazeux qui le traverse.

Chaque media filtrant de la paroi tubulaire, comme ici le media de référence 211, s'étend longitudinalement sur la hauteur du lit catalytique concerné.

Ledit media s'étend longitudinalement sur le tronçon de tube mais pas sur toute sa hauteur. Son extrémité supérieure est ouverte pour laisser entrer les gaz qui arrivent par au-dessus, alors que son extrémité inférieure est obstruée de manière à être étanche au passage des gaz, afin que les gaz ne s'échappent pas par cette extrémité et de ce fait soient contraints de traverser le lit catalytique adjacent à la crépine.

Selon le principe de fonctionnement d'un convertisseur d'ammoniac réalisé selon l'invention et de type vertical tel que représenté sur les figures, le mélange de gaz G (azote-hydrogène) injecté en partie basse du récipient, arrive par plusieurs entrées E1 et E2 et pénètre dans la chambre d'injection 40, située en partie inférieure de la coque externe, munie d'un distributeur en forme de dôme D qui soutient le lit catalytique inférieur et assure une diffusion uniforme dudit gaz montant dans les tubes de la paroi tubulaire interne, tels que les tubes 2 et 3 observables sur la figure 1, jusqu'à la chambre de distribution supérieure 41, puis est dirigé dans une conduite centrale 61 du réacteur pour aller réagir avec le catalyseur du lit catalytique supérieur LA, après avoir passé à travers un échangeur de chaleur (à tubes) 5, en passant par le media filtrant 333 accolé au tronçon du tube 33 de la zone catalytique supérieure A.

Selon cet exemple on injecte de plus du gaz à convertir par une conduite centrale 60 depuis l'entrée E3 en bas du récipient qui vient se mélanger aux gaz descendants au niveau de l'échangeur de chaleur 5.

Le mélange gazeux diffuse radialement à travers ledit lit catalytique LA pour réagir avec le catalyseur, et sort sous forme d'un flux qui traverse le media filtrant interne cylindrique 73 de ce lit catalytique supérieur LA. L'effluent gazeux qui sort de ce lit catalytique supérieur LA contient en partie de l'ammoniac, il est ensuite conduit, à nouveau entre les tubes de l'échangeur de chaleur 5, vers une deuxième zone catalytique intermédiaire B qui se trouve en dessous de ladite zone supérieure A, en passant à travers le media filtrant 322 accolé au tronçon du tube 32 de cette zone A, de manière à ce qu'à nouveau le mélange gazeux réagisse avec le catalyseur de ce second lit catalytique. LB en le traversant radialement jusqu'à diffuser à travers un autre media filtrant interne 72, cylindrique, centré sur l'axe central vertical du récipient. Ensuite le flux gazeux sortant empreinte l'espace annulaire central 12 pour être acheminé et traité de la même manière à travers d'autres lits catalytiques le cas échéant, jusqu'à atteindre le dernier lit catalytique qui est le lit inférieur LC, toujours à travers un media filtrant 71 accolé à un tronçon de tube 31 de la zone catalytique C considérée, pour traverser radialement et réagir dans ce dernier lit catalytique. Le flux gazeux sortant final, qui est totalement de l'ammoniac, est alors conduit axialement dans une conduite K qui lui est dédiée jusqu'à la sortie S située en partie basse du récipient. Le gaz ammoniac sera ensuite stocké sous forme liquide ou directement utilisé.

La chambre d'injection de gaz 40 en partie inférieure de la coque externe comprend un dôme D qui distribue et assure une diffusion uniforme du gaz injecté qui monte vers les tubes des éléments tubulaires de la paroi interne, tout en supportant la contrainte mécanique exercée sur le disque support 8C du lit catalytique inférieur, auquel sont soudés les tuyaux d'alimentation en gaz H, raccordés auxdits éléments tubulaires. Au centre du dôme est fixé le tuyau de sortie K de l'effluent gazeux descendant vers la sortie S du convertisseur.

La chambre de distribution des gaz 41, située en partie supérieure de la coque externe comprend un cône supérieur 90 concentrique par rapport à l'axe central longitudinal de la coque 1, permettant d'avoir une zone de circulation de gaz descendant de diamètre réduit, réduisant aussi le diamètre de la bride 92 de fermeture de tête qui maintient le distributeur 91 d'apport de gaz à traiter préchauffé introduit en l'entrée supérieure E4, utilisé au démarrage du procédé catalytique.

Comme illustré sur la figure 2, chaque disque, tel que le disque 8B, qui supporte une zone catalytique, comporte une ouverture 80B se fermant et ménagée pour permettre le passage d'un individu, appelée dans le métier «trou d'homme». Cette ouverture est située dans la partie annulaire qui se trouve entre le media filtrant interne 71 et les éléments tubulaires de la paroi tubulaire interne de la zone catalytique considérée. Cette ouverture est bien sûr bouchée, par exemple par une plaque, lorsque les particules de catalyseur sont présentes dans la zone catalytique considérée. Cette ouverture est débouchée pour permettre d'accéder à la zone catalytique d'en-dessous, pour toutes les interventions nécessaires en installation ou maintenance. Ces « trous d'homme » sont utilisés avantageusement pour monter ou enlever les éléments internes du convertisseur dans la coque externe.

Au fur et à mesure que le mélange gazeux azote-hydrogène traverse les différents lits catalytiques, il est converti en gaz ammoniac selon un procédé de conversion en soi connu, basé sur le procédé de base HABER ou d'autres procédés qui en sont dérivés. Les catalyseurs utilisés sont aussi en soi connus.

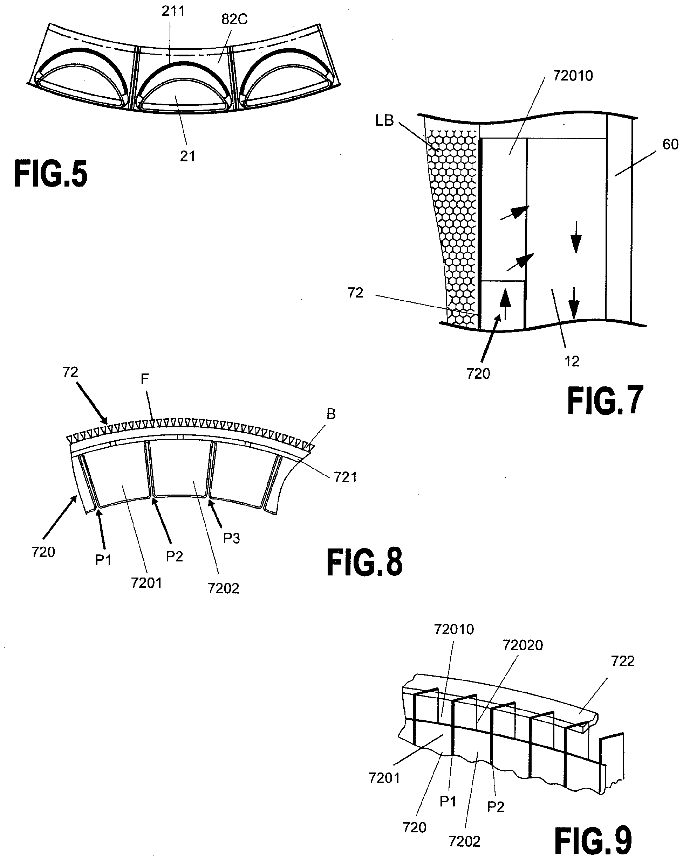

La figure 5 illustre une vue partielle de la paroi tubulaire interne du convertisseur selon l'invention, vue en coupe transversale (de dessus). Les éléments tubulaires sont disposés en couronne. Chaque tronçon de tube 21, muni de son media filtrant 211, est soudé en sa base sur une lumière ménagée dans un plat 82C, et de manière à fermer l'extrémité inférieure dudit media filtrant par la partie pleine dudit plat. Chaque plat est monté sur le disque support de la zone catalytique correspondant. Les plats sont usinés pour s'emboîter côte à côte de manière à former une couronne sur le pourtour dudit disque. De préférence un joint d'étanchéité est disposé entre chaque plat.

En outre et de préférence, l'extrémité inférieure de chaque tronçon de tube est légèrement coudée pour être un peu éloignée de la paroi de la coque externe et ainsi faciliter le montage de chaque tube par emboîtage de son plat de base sur le disque support du lit catalytique considéré.

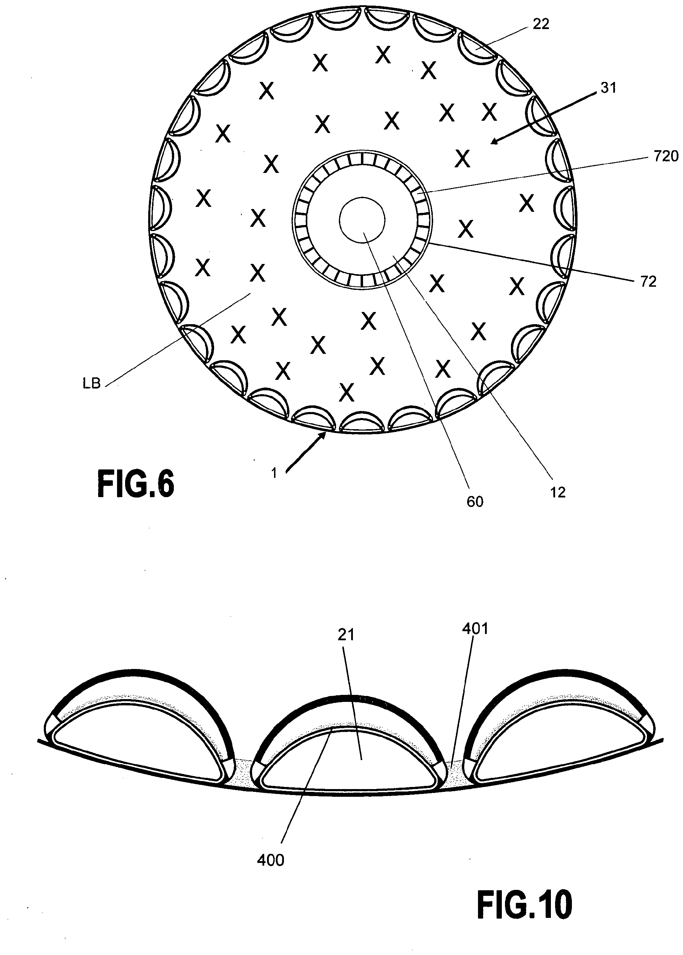

Pour parfaire le contrôle thermique du convertisseur, on dispose avantageusement une couche isolante thermiquement sur la partie avant des tronçons de tube de chaque élément tubulaire telle que la couche isolante 400 représentée sur la figure 10 et/ou une zone isolante entre chaque tube d'éléments tubulaires consécutifs dans la couronne formée par leur assemblage, formant un joint d'isolation thermique tel que représenté par la zone 401 sur la figure 10. En pratique chaque joint d'isolation est protégé du contact direct avec les particules du lit catalytique. Pour cela on peut par exemple plaquer une feuille métallique, non représentée sur la figure 10, sur la surface dudit joint d'isolation qui est orientée vers le lit catalytique. Cette feuille métallique est de très faible épaisseur pour pouvoir épouser la forme du joint et elle est perforée avec une taille de perforations ne permettant pas le passage des particules de catalyseur vers ledit joint. Ladite feuille métallique est par exemple fixée aux media filtrants adjacents audit joint, par exemple à l'aide de pattes.

La figure 6 est une vue partielle illustrant en coupe, dans le plan transversal du second lit catalytique d'un convertisseur selon l'invention, tel que représenté en figure 1, un convertisseur équipé d'un media filtrant interne associé à un déflecteur d'un effluent gazeux en tôle illustré par ailleurs aux figures 7 à 8 et visible sur la figure 9. Selon cette figure le media filtrant interne cylindrique 72, est associé à un dispositif cylindrique 720 formé d'une tôle cannelée, fermée sur elle-même, cylindrique. La tôle perforée 721 dudit media filtrant est disposée entre la crépine du media filtrant et ladite tôle cannelée. La tôle cannelée 720 est plissée et forme des canaux longitudinaux 7201, 7202, délimités chacun par deux plis longitudinaux, respectivement (P1, P2) et (P2, P3), qui forment les parois longitudinales latérales du canal. Chaque canal a une paroi frontale longitudinale, tous les canaux ayant la même orientation verticale. La partie ouverte du canal est en contact avec la tôle perforée 721 située entre la crépine et cette tôle cannelée. La tôle cannelée 720 comprend des découpes en sa partie supérieure qui forment chacune une ouverture en haut de chaque canal et qui permet ainsi à l'effluent gazeux qui a traversé le media filtrant 72 en sortant du lit catalytique considéré (LB) d'être dirigé vers le haut des canaux pour sortir à travers ces ouvertures et redescendre par l'espace annulaire central 12 vers le lit catalytique (LC) situé en-dessous, les extrémités supérieure et inférieure de l'ensemble media filtrant interne et déflecteur étant obstruées.

Le flux gazeux passe donc dans les canaux longitudinaux du déflecteur tels que les canaux 7201 et 7202 représentés sur les figures 8 ou 9 dans lesquels il est acheminé pour remonter jusqu'aux ouvertures 72010, 72020 telles que représentées sur les figures 7 ou 9 en haut des canaux. L'effluent gazeux passe alors dans l'espace annulaire 12 du récipient (espace entre la canalisation centrale 6 et ledit support en tôle) pour redescendre vers le lit catalytique inférieur, selon cet exemple LC, en empruntant le media filtrant accolé au tronçon de tube correspondant de la paroi tubulaire interne du récipient du convertisseur.

Un tel déflecteur d'effluent gazeux en tôle cannelée associé à une crépine interne cylindrique est particulièrement avantageux car il est relativement léger tout en étant très résistant du fait de sa configuration plissée. La tôle perforée entre la crépine et la tôle cannelée est de faible épaisseur. Un tel déflecteur permet, conformément au but de l'invention, de diminuer la quantité de matière nécessaire à sa fabrication par rapport à l'art antérieur et donc d'alléger le poids du convertisseur et de diminuer les coûts. Il est plus aisément maniable.

Le convertisseur d'ammoniac muni d'une paroi tubulaire selon l'invention est particulièrement léger et donc moins onéreux qu'un convertisseur à double enveloppe. De surcroît le déflecteur d'effluent gazeux en tôle cannelée associé à un media filtrant interne cylindrique allège encore le convertisseur tout en restant solide.

Pour procéder à l'installation du convertisseur, notamment des composants internes, appelés couramment dans le métier « les internes », on installe d'abord ladite coque externe verticalement, de préférence sur le site d'exploitation, puis on monte la paroi tubulaire interne dans ladite coque, zone catalytique par zone catalytique.

Selon un mode préféré de cet exemple, dans la coque externe 1, on installe d'abord des disques supports 8C, 8B, 8A des zones catalytiques C, B, A (les disques étant percés en leur partie centrale pour laisser passer les composants centraux, et comportant une ouverture permettant le passage d'un être humain). La chambre inférieure 40 avec son dôme perforé D et le cône supérieur de réduction 90, concentrique par rapport à l'axe central longitudinal de la coque ont été préalablement installés. Le disque support 8C de la zone catalytique inférieure C repose en partie sur le dôme D.

On installe alors une partie de paroi tubulaire interne à double conduit correspondant à la zone catalytique inférieure C en disposant les tronçons de tube de ladite paroi, munis chacun de leur media filtrant respectif, par fixation de chaque plat auquel lesdits tronçons sont fixés de manière à disposer lesdits tronçons de cette zone catalytique en couronne sur le pourtour du disque support de la zone catalytique. Les tronçons de tube se trouvent dressés verticalement suivant l'axe longitudinal central de la coque externe, en couvrant la paroi interne de la coque externe dans la zone catalytique considérée, leur media filtrant étant tourné vers l'intérieur du récipient.

On poursuit l'installation de la zone catalytique située au-dessus, selon cet exemple la zone intermédiaire B, en montant la partie de paroi tubulaire correspondant à cette zone comme décrit pour la zone inférieure. Les raccords entre les tronçons de la zone inférieure C et cette zone au-dessus B sont réalisés à l'aide de tuyaux annexes, disposés entre les extrémités des tronçons, serrés par des manchons étanches selon une configuration qui permet aux joints de supporter la dilatation thermique des tronçons de tube, notamment dans le sens vertical.

On installe de même la zone catalytique supérieure A.

La chambre de distribution 41 en partie supérieure de la coque est ensuite installée, notamment le distributeur circulaire 91 et la bride 92 de fermeture en tête de la coque.

Comme cela vient d'être mentionné, le convertisseur selon l'invention utilisant le système tubulaire décrit est particulièrement avantageux à fabriquer car les composants internes dudit convertisseur sont montés sur le site d'exploitation, dans la coque externe une fois en place. Ceci évite d'avoir à transporter les internes déjà montés dans une enveloppe interne jusqu'au site d'exploitation et d'avoir à soulever une masse énorme comme cela était le cas pour les convertisseurs de l'art antérieur.

De plus la paroi tubulaire ainsi conçue permet de pouvoir intervenir facilement au niveau du réacteur pour remplacer le catalyseur usé ou pour effecteur des réparations, sans avoir à prévoir des interventions complexes et difficiles. On peut en effet réaliser facilement des trous d'hommes au niveau de chaque zone catalytique pour passer d'une zone à l'autre.

Il ressort néanmoins de ce qui précède que l'invention n'est pas limitée aux modes de mise en oeuvre qui ont été spécifiquement décrits et représentés sur les figures et qu'elle s'étend au contraire à toute variante passant par le biais de moyens équivalents.

L'invention s'applique aux convertisseurs d'ammoniac comportant un seul lit catalytique ou plusieurs lits catalytiques.

## Revendications

1. Convertisseur d'ammoniac vertical à lits catalytiques à flux radial, comprenant un récipient formé d'une coque externe et équipé d'une paroi tubulaire interne à double conduit pour acheminer des effluents dans le sens montant et dans le sens descendant, ladite paroi tubulaire étant faite d'une multitude d'éléments tubulaires verticaux disposés en couronne sur le pourtour de la paroi interne de ladite coque externe (1), lesdits éléments tubulaires étant formés de tubes (2, 3) à paroi étanche aux gaz, ouverts en leurs extrémités inférieure et supérieure pour conduire un effluent à traiter dans le sens montant d'une chambre d'injection (40) située en partie inférieure de ladite coque vers une chambre de distribution (41) située en partie supérieure de ladite coque, tubes auxquels sont accolés des media filtrants (211, 222, 233 ; 321, 322 ; 333) sur la hauteur d'un lit catalytique (LA, LB, LC), les media filtrants étant ouverts en leur extrémité supérieure pour permettre l'entrée d'un effluent descendant et fermés en leur extrémité inférieure pour conduire cet effluent et le diffuser à travers leur face perméable audit effluent vers le lit catalytique retenu sur sa face externe par lesdits media filtrants.

2. Convertisseur d'ammoniac vertical selon la revendication 1, comprenant un récipient doté d'une coque externe verticale à section circulaire et une pluralité de zones catalytiques (A, B, C) à lits catalytiques toriques (LA, LB, LC) fixés espacés verticalement dans ladite coque, incluant une zone catalytique supérieure (A) et une zone catalytique inférieure (C), de préférence au moins la zone supérieure comportant un échangeur central de chaleur à tubes (5), et chaque zone catalytique comprenant en outre un media filtrant interne (71, 72, 73) disposé centré autour de l'axe central longitudinal dudit récipient pour s'étendre sur la hauteur du lit catalytique de ladite zone, ledit récipient étant équipé d'une paroi interne tubulaire formée d'une pluralité d'éléments tubulaires verticaux disposés en couronne sur tout le pourtour de la paroi interne de ladite coque externe, lesdits éléments étant chacun constitués d'un tube (2) et de media filtrants (211, 222, 233), chaque tube étant constitué d'une suite de tronçons de tubes (21, 22, 23) à paroi étanche aux gaz, assemblés verticalement de manière étanche les uns à la suite des autres pour former un tube ouvert en ses extrémités inférieure et supérieure, l'extrémité inférieure débouchant en dessous de la zone catalytique inférieure et l'extrémité supérieure débouchant au-dessus de la zone catalytique supérieure, chaque tronçon de tube (21) présentant une face avant (2101), dirigée vers l'intérieur du récipient, à laquelle est accolée longitudinalement un media filtrant (211) s'étendant sur la hauteur du lit catalytique (LC) d'une zone catalytique donnée (C), l'extrémité inférieure dudit media filtrant étant fermée de manière étanche aux gaz et l'extrémité supérieure dudit media filtrant étant ouverte.

3. Convertisseur selon la revendication 1 ou 2, **caractérisé en ce que** la face tournée vers la paroi interne de la coque externe de chaque tube des éléments tubulaires, en particulier de chaque tronçon de tube, présente un rayon de courbure sensiblement égal à celui de la paroi interne de la coque externe et que leur face avant (2101) présente une convexité dirigée vers l'intérieur du récipient.

4. Convertisseur selon l'une des revendications 1 à 3, **caractérisé en ce que** les media filtrants accolés aux tubes des éléments tubulaires ont chacun une forme convexe de convexité tournée vers le lit catalytique lui correspondant.

5. Convertisseur selon l'une des revendications précédentes, **caractérisé en ce que** chaque lit catalytique ou zone catalytique repose sur un disque (8A, 8B, 8C), et dont de préférence le bord externe est fixé à la paroi interne de la coque externe (1) du récipient.

6. Convertisseur selon l'une des revendications précédentes, **caractérisé en ce que** les tronçons de tube des éléments tubulaires de ladite paroi tubulaire, munis de leur media filtrant respectif et dédiés à une zone catalytique donnée, sont fixés chacun en leur base sur une lumière ménagée dans un plat, l'extrémité inférieure dudit media filtrant étant obstruée par la partie pleine dudit plat.

7. Convertisseur selon l'une des revendications 5 ou 6, **caractérisé en ce que** lesdits plats supportant les tronçons de tube munis de leur media filtrant, d'une zone catalytique donnée, sont positionnés sur le pourtour externe du disque support de ladite zone.

8. Convertisseur selon l'une des revendications 5 à 7, **caractérisé en ce que** ledit disque support de lit catalytique comporte une ouverture se fermant, ménagée entre les éléments tubulaires et le media filtrant interne, et d'une taille permettant le passage d'un individu.

9. Convertisseur selon l'une des revendications précédentes, **caractérisé en ce que** la chambre d'injection (40) située en partie inférieure de la coque externe (1) comporte un dôme (D) perforé permettant la diffusion homogène du fluide injecté et supportant la zone catalytique située au-dessus.

10. Convertisseur selon l'une des revendications précédentes, **caractérisé en ce que** la chambre de distribution (41) située en partie supérieure de la coque externe (1) comporte un cône supérieur (90) concentrique par rapport à l'axe longitudinal central de la coque (1), supportant la bride de fermeture de tête (92) qui de préférence maintient un distributeur (91) de fluide en tête du récipient.

11. Convertisseur selon l'une des revendications précédentes, **caractérisé en ce que** le media filtrant interne (72) d'un lit catalytique donné est associé à un déflecteur (720) de l'effluent sortant dudit media se présentant sous forme d'une tôle cannelée à canaux longitudinaux (7201), fermée sur elle-même, disposée sur le pourtour intérieur dudit media filtrant interne, la tôle perforée (721) de diffusion de l'effluent que comporte ledit media interne étant interposée entre le tamis dudit media filtrant et ladite tôle cannelée, les extrémités inférieure et supérieure de l'ensemble formé par ledit media filtrant interne et la tôle cannelée étant fermées de manière étanche aux gaz de sorte que lesdits canaux longitudinaux, chacun délimité par deux plis consécutifs (P1, P2) de la paroi de ladite tôle cannelée, forment des conduits qui dirigent l'effluent sortant vers le haut de la zone catalytique, des ouvertures étant en outre ménagées uniquement en haut de chaque canal longitudinal pour permettre le passage de l'effluent vers l'espace annulaire central (5, 12) du récipient.

12. Système tubulaire à double conduit pour former la paroi interne d'un récipient d'un convertisseur d'ammoniac à lits catalytiques à flux radial, comprenant une pluralité de tronçons de tubes (21, 22, 23, 31, 32, 33) à paroi étanche aux gaz et de media filtrants (211, 222, 233 ; 321, 322 ; 333), chaque tronçon de tube présentant une face à laquelle est accolé longitudinalement un media filtrant de forme convexe pour former un conduit, l'une des extrémités dudit media filtrant étant ouverte, l'autre extrémité dudit media filtrant étant fermée de manière étanche aux gaz, la base de chacun desdits tronçons de tube étant fixée de préférence sur une lumière ménagée dans un plat, l'extrémité dudit media filtrant se trouvant en cette base étant obstruée par la partie pleine dudit plat, chaque plat étant en outre de préférence usiné de manière à ce qu'il soit monté sur le pourtour externe d'un disque support de lit catalytique.

13. Procédé d'installation de composants internes d'un récipient d'un convertisseur d'ammoniac vertical comprenant des zones catalytiques (A, B, C) à flux radial, le récipient comprenant une coque externe, selon lequel on installe ladite coque externe (1) verticalement puis on monte une paroi tubulaire interne dans ladite coque, zone catalytique par zone catalytique, en utilisant un système tubulaire tel que décrit à la revendication 12.

14. Procédé d'installation suivant la revendication précédente, selon lequel :
- dans la coque externe on installe des disques supports des zones catalytiques, percés en leur partie centrale pour laisser passer des composants centraux, et comportant une ouverture se fermant d'une taille permettant le passage d'un individu,
- on installe une partie de paroi tubulaire interne à double conduit correspondant à la zone catalytique inférieure en fixant les tronçons de tube de ladite paroi, munis chacun de leur media filtrant respectif, en couronne sur le pourtour externe du disque support de la zone catalytique, les tronçons de tube étant dressés verticalement, de préférence à équidistance les uns des autres, contre la paroi interne de la coque externe, les media filtrants étant tournés vers l'intérieur du récipient, et on poursuit l'installation de la paroi tubulaire interne en installant de même successivement les tronçons de tube de chaque zone catalytique en remontant vers le haut du récipient, les tronçons de tube d'une zone catalytique à l'autre étant raccordés de manière étanche par des moyens de raccordement annexes, qui de préférence assurent de plus la dilatation thermique verticale des tronçons.

## Patentansprüche

1. Vertikaler Ammoniakkonverter mit katalytischen Betten mit radialer Strömung mit einem Behälter, der aus einer äußeren Schale gebildet ist und mit einer röhrenförmigen Innenwand mit doppelter Leitung ausgestattet ist, um Abströme in der aufsteigenden Richtung und der absteigenden Richtung zu befördern, wobei die röhrenförmige Wand aus einer Mehrzahl von vertikalen röhrenförmigen Elementen hergestellt ist, die ringförmig auf dem Umfang der Innenwand der äußeren Schale (1) angeordnet sind, wobei die röhrenförmigen Elemente aus Rohren (2, 3) mit gasdichter Wand gebildet sind, die an ihren unteren und oberen Enden offen sind, um einen zu behandelnden Abstrom in der aufsteigenden Richtung von einer Einspeisekammer (40), die sich am unteren Teil der Schale befindet, zu einer Verteilungskammer (41), die sich am oberen Teil der Schale befindet, zu leiten, wobei an die Rohre Filtermedien (211, 222, 233; 321, 322; 333) auf der Höhe eines katalytischen Betts (LA, LB, LC) angefügt sind, wobei die Filtermedien an ihrem oberen Ende offen sind, um den Eintritt eines Stromabwärtsabstroms zu ermöglichen, und an ihrem unteren Ende geschlossen sind, um diesen Abstrom zu leiten und ihn durch ihre für den Abstrom durchlässige Fläche zum katalytischen Bett zu diffundieren, das an seiner äußeren Fläche durch die Filtermedien gehalten wird.

2. Vertikaler Ammoniakkonverter nach Anspruch 1, der einen Behälter umfasst, der mit einer vertikalen äußeren Schale mit kreisförmigem Querschnitt und einer Vielzahl von katalytischen Zonen (A, B, C) mit torischen katalytischen Betten (LA, LB, LC), die vertikal beabstandet in der Schale befestigt sind, mit einer oberen katalytischen Zone (A) und einer unteren katalytischen Zone (C) versehen ist, wobei vorzugsweise mindestens die obere Zone einen zentralen Rohrwärmetauscher (5) umfasst und jede katalytische Zone außerdem ein inneres Filtermedium (71, 72, 73) umfasst, das um die zentrale Längsachse des Behälters zentriert angeordnet ist, um sich auf der Höhe des katalytischen Betts der Zone zu erstrecken, wobei der Behälter mit einer röhrenförmigen Innenwand ausgestattet ist, die aus einer Vielzahl von vertikalen röhrenförmigen Elementen gebildet ist, die ringförmig auf dem ganzen Umfang der Innenwand der äußeren Schale angeordnet sind, wobei die Elemente jeweils aus einem Rohr (2) und Filtermedien (211, 222, 233) gebildet sind, wobei jedes Rohr aus einer Folge von Abschnitten von Rohren (21, 22, 23) mit gasdichter Wand besteht, die vertikal in dichter Weise nacheinander zusammengefügt sind, um ein an seinen unteren und oberen Enden offenes Rohr zu bilden, wobei das untere Ende unterhalb der unteren katalytischen Zone mündet und das obere Ende über der oberen katalytischen Zone mündet, wobei jeder Rohrabschnitt (21) eine vordere Fläche (2101) aufweist, die zur Innenseite des Behälters gerichtet ist, an die ein Filtermedium (211) longitudinal angefügt ist, das sich auf der Höhe des katalytischen Betts (LC) einer gegebenen katalytischen Zone (C) erstreckt, wobei das untere Ende des Filtermediums in gasdichter Weise verschlossen ist und das obere Ende des Filtermediums offen ist.

3. Konverter nach Anspruch 1 oder 2, **dadurch gekennzeichnet, dass** die zur Innenwand der äußeren Schale jedes Rohrs der röhrenförmigen Elemente, insbesondere jedes Rohrabschnitts, gewandte Fläche einen Krümmungsradius aufweist, der im Wesentlichen gleich jenem der Innenwand der äußeren Schale ist, und dass ihre vordere Fläche (2101) eine Konvexität aufweist, die zur Innenseite des Behälters gerichtet ist.

4. Konverter nach einem der Ansprüche 1 bis 3, **dadurch gekennzeichnet, dass** die Filtermedien, die an die Rohre der röhrenförmigen Elemente angefügt sind, jeweils eine konvexe Form mit einer Konvexität aufweisen, die zum katalytischen Bett gerichtet ist, das ihm entspricht.

5. Konverter nach einem der vorangehenden Ansprüche, **dadurch gekennzeichnet, dass** jedes katalytische Bett oder jede katalytische Zone auf einer Scheibe (8A, 8B, 8C) aufliegt, von der vorzugsweise der äußere Rand an der Innenwand der äußeren Schale (1) des Behälters befestigt ist.

6. Konverter nach einem der vorangehenden Ansprüche, **dadurch gekennzeichnet, dass** die Rohrabschnitte der röhrenförmigen Elemente der röhrenförmigen Wand, die mit ihrem jeweiligen Filtermedium ausgestattet sind und für eine gegebene katalytische Zone vorgesehen sind, jeweils an ihrer Basis an einem Schlitz befestigt sind, der in einer Flachstelle ausgebildet ist, wobei das untere Ende des Filtermediums durch den vollen Teil der Flachstelle blockiert ist.

7. Konverter nach einem der Ansprüche 5 oder 6, **dadurch gekennzeichnet, dass** die Flachstellen, die die Rohrabschnitte, die mit ihrem Filtermedium versehen sind, einer gegebenen katalytischen Zone abstützen, auf dem äußeren Umfang der Trägerscheibe der Zone positioniert sind.

8. Konverter nach einem der Ansprüche 5 bis 7, **dadurch gekennzeichnet, dass** die Trägerscheibe des katalytischen Betts eine Öffnung, die sich schließt, die zwischen den röhrenförmigen Elementen und dem inneren Filtermedium ausgebildet ist, und mit einer Größe, die den Durchgang einer Person ermöglicht, umfasst.

9. Konverter nach einem der vorangehenden Ansprüche, **dadurch gekennzeichnet, dass** die Einspeisekammer (40), die sich am unteren Teil der äußeren Schale (1) befindet, eine perforierte Kuppel (D) umfasst, die die homogene Diffusion des eingespeisten Fluids ermöglicht und die katalytische Zone, die sich darüber befindet, abstützt.

10. Konverter nach einem der vorangehenden Ansprüche, **dadurch gekennzeichnet, dass** die Verteilungskammer (41), die sich am oberen Teil der äußeren Schale (1) befindet, einen oberen Konus (90) umfasst, der in Bezug auf die zentrale Längsachse der Schale (1) konzentrisch ist, der den Kopfverschlussflansch (92) abstützt, der vorzugsweise einen Fluidverteiler (91) am Kopf des Behälters hält.

11. Konverter nach einem der vorangehenden Ansprüche, **dadurch gekennzeichnet, dass** das innere Filtermedium (72) eines gegebenen katalytischen Betts mit einer Ablenkeinrichtung (720) des Abstroms verbunden ist, der aus dem Medium austritt, der in Form eines geriffelten Blechs mit Längskanälen (7201) vorliegt, das auf sich selbst geschlossen ist, das auf dem inneren Umfang des inneren Filtermediums angeordnet ist, wobei das perforierte Blech (721) zur Diffusion des Abstroms, das das innere Medium umfasst, zwischen das Sieb des Filtermediums und das geriffelte Blech eingefügt ist, wobei die unteren und oberen Enden der Baugruppe, die durch das innere Filtermedium und das geriffelte Blech gebildet ist, in gasdichter Weise geschlossen sind, so dass die Längskanäle, die jeweils durch zwei aufeinander folgende Falten (P1, P2) der Wand des geriffelten Blechs begrenzt sind, Leitungen bilden, die den austretenden Abstrom zur Oberseite der katalytischen Zone lenken, wobei Öffnungen außerdem nur an der Oberseite jedes Längskanals ausgebildet sind, um den Durchgang des Abstroms zum zentralen ringförmigen Raum (5, 12) des Behälters zu ermöglichen.

12. Röhrenförmiges System mit doppelter Leitung, um die Innenwand eines Behälters eines Ammoniakkonverters mit katalytischen Betten mit radialer Strömung zu bilden, mit einer Vielzahl von Rohrabschnitten (21, 22, 23, 31, 32, 33) mit gasdichter Wand und Filtermedien (211, 222, 233; 321, 322; 333), wobei jeder Rohrabschnitt eine Fläche aufweist, an die longitudinal ein Filtermedium mit konvexer Form angefügt ist, um eine Leitung zu bilden, wobei eines der Enden des Filtermediums offen ist, wobei das andere Ende des Filtermediums in gasdichter Weise geschlossen ist, wobei die Basis von jedem der Rohrabschnitte vorzugsweise an einem Schlitz befestigt ist, der in einer Flachstelle ausgebildet ist, wobei das Ende des Filtermediums, das sich an dieser Basis befindet, durch den vollen Teil der Flachstelle blockiert ist, wobei jede Flachstelle außerdem vorzugsweise bearbeitet ist, so dass sie am äußeren Umfang einer Trägerscheibe eines katalytischen Betts montiert ist.

13. Verfahren zur Installation von inneren Komponenten eines Behälters eines vertikalen Ammoniakkonverters mit katalytischen Zonen (A, B, C) mit radialer Strömung, wobei der Behälter eine äußere Schale umfasst, gemäß der die äußere Schale (1) vertikal installiert wird, dann eine röhrenförmige Innenwand in der Schale, katalytische Zone für katalytische Zone, unter Verwendung eines röhrenförmigen Systems, wie in Anspruch 12 beschrieben, montiert wird.

14. Verfahren zur Installation nach dem vorangehenden Anspruch, gemäß dem:
- in der äußeren Schale Trägerscheiben der katalytischen Zonen installiert werden, die an ihrem zentralen Teil durchbohrt sind, um zentrale Komponenten durchzulassen, und eine Öffnung, die sich verschließt, mit einer Größe, die den Durchgang einer Person ermöglicht, umfassen,
- ein Teil einer röhrenförmigen Innenwand mit doppelter Leitung, der der unteren katalytischen Zone entspricht, durch Befestigen der Rohrabschnitte der Wand, die jeweils mit ihrem jeweiligen Filtermedium versehen sind, ringförmig auf dem äußeren Umfang der Trägerscheibe der katalytischen Zone installiert wird, wobei die Rohrabschnitte vertikal, vorzugsweise in gleichem Abstand voneinander, an der Innenwand der äußeren Schale aufgestellt werden, wobei die Filtermedien zur Innenseite des Behälters gewandt sind, und die Installation der röhrenförmigen Innenwand durch ebenso aufeinander folgendes Installieren der Rohrabschnitte jeder katalytischen Zone durch Hochziehen zur Oberseite des Behälters fortgesetzt wird, wobei die Rohrabschnitte von einer katalytischen Zone zur anderen durch zugehörige Verbindungsmittel in dichter Weise verbunden werden, die vorzugsweise außerdem die vertikale Wärmeausdehnung der Abschnitte sicherstellen.

## Claims

1. A vertical ammonia converter with radial flow catalytic beds comprising a container formed of an external casing and provided with an internal tubular wall with a double conduit intended to convey effluents upwardly and downwardly, said tubular wall being made of a multitude of vertical tubular elements arranged in a crown on the edge of the internal wall of said external casing (1), said tubular elements being made of tubes (2, 3) with gas tight wall, opened at their lower and upper ends to convey an effluent to be treated in the upward direction of an injection chamber (40) located in lower part of said casing towards a distribution chamber (41) located in an upper part of said casing, tubes to which are coupled filtering media (211, 222, 233; 321, 322; 333) over the height of a catalytic bed (LA, LB, LC), filtering media being open at their upper end to allow the entry of an effluent flowing downwardly and closed at their lower end to convey this effluent and to diffuse it through their face permeable to said effluent towards the catalytic bed retained on its external face by said filtering media.

2. The vertical ammonia converter according to claim 1, comprising a container equipped with a vertical external casing having a circular section and a plurality of catalytic areas (A, B, C) with toric catalytic beds (LA, LB, LC) vertically spaced, secured within said casing, including an upper catalytic area (A) and a lower catalytic area (C), preferably at least the upper area including a central heat exchanger (5) provided with tubes, and each catalytic area further comprising an internal filtering media (71, 72, 73) laid out at the center about the central longitudinal axis of said container in order to extend it on the height of the catalytic bed of said area, said container being equipped with a tubular internal wall provided with a plurality of vertical tubular elements laid out in a crown on the whole edge of the internal wall of said external casing, said elements being each one constituted of a tube (2) and filtering media (211, 222, 233), each tube being made of a succession of tubes sections (21, 22, 23) with a gas tight wall, vertically assembled in a tight way the ones following the others to form an open tube at its lower and upper ends, the lower end emerging below the lower catalytic area and the upper end emerging above the upper catalytic area, each tube section (21) having a front face (2101), directed towards the interior of the container, to which is longitudinally coupled a filtering media (211) extending on the height of the catalytic bed (LC) of a given catalytic area (C), the lower end of said filtering medium being closed in a gas tight way and the upper end of said filtering medium being open.

3. The converter according to claim 1 or 2, **characterized in that** the face, directed to the internal wall of the external casing of each tube of the tubular elements, particularly of each tube section, has a curvature radius substantially equal to that of the internal wall of the external casing and **in that** the front face (2101) has a convexity directed towards the interior of the container.

4. The converter according to one of claims 1 to 3, **characterized in that** the filtering media coupled to the tubes of the tubular elements present each one a convex form whose the convexity is directed towards the corresponding catalytic bed.

5. The converter according to one of the preceding claims, **characterized in that** each catalytic bed or catalytic area rests on a disc (8A, 8B, 8C), and preferably whose the external edge is secured to the internal wall of the container external casing (1).

6. The converter according to one of the preceding claims,
**characterized in that** the tube sections of the tubular elements of said tubular wall, provided with their respective filtering medium and dedicated to a given catalytic area, are each one secured at their basis on a lumen arranged within a plate, the lower end of said filtering medium being closed by the solid part of said plate.

7. The converter according to one of claims 5 or 6, **characterized in that** said plates carrying the tube sections provided with their filtering medium of a given catalytic area, are positioned on the external edge of the support disc of said area.

8. The converter according to one of claims 5 to 7, **characterized in that** said support disc of the catalytic bed includes a closeable opening, provided between the tubular elements and the internal filtering media and having a size allowing the passage of a person.

9. The converter according to one of the preceding claims, **characterized in that** the injection chamber (40) located at the lower part of the external casing (1) includes a perforated dome (D) allowing the homogeneous diffusion of the injected fluid and supporting the catalytic area located above it.

10. The converter according to one of the preceding claims, **characterized in that** the distribution chamber (41) located at the upper part of the external casing (1) includes an upper cone (90) concentric relatively to the central longitudinal axis of the casing (1), supporting the head closing flange (92) which preferably holds a fluid distributor (91) at the container head.

11. The converter according to one of the preceding claims, **characterized in that** the internal filter medium (72) of a given catalytic bed is associated to a deflector (720) for the effluent leaving said medium having the shape of a grooved sheet with longitudinal channels (7201), closed on itself, arranged on the internal edge of said internal filter medium, the perforated sheet (721) intended to diffuse the effluent that includes said internal medium being interposed between the sieve of said filtering media and the grooved sheet, the lower and upper ends of the assembly formed by said internal filtering media and the grooved sheet being gas tight closed so that said longitudinal channels, each one being delimited by two consecutive folds (P1, P2) of the wall of said grooved sheet, form conduits which direct upwardly the effluent leaving the catalytic area, openings being further provided only at the top of each longitudinal channel to allow the passage of the effluent towards the central annular space (5, 12) of the container.

12. A double conduit tubular device intended to form the internal wall of a container for an ammonia converter with radial flow catalytic beds, comprising a plurality of tube sections (21, 22, 23, 31, 32, 33) with gas tight wall and filtering media (211, 222, 233; 321, 322; 333), each tube section having a face to which a filtering medium of a convex shape is longitudinally coupled to form a conduit, one of the ends of said filtering medium being open, the other end of said filtering medium being closed in a gas tight way, the basis of each one of said tube sections being preferably secured on a lumen arranged within a plate, the end of said filtering medium located in this basis being closed by the solid part of said plate, each plate being further preferably so machined that it is mounted on the external edge of a catalytic bed support disc.

13. A method for installing internal components of a container for a vertical ammonia converter comprising radial flow catalytic areas (A, B, C), the container comprising an external casing, wherein one installs said external casing (1) vertically, and then one assembles an internal tubular wall within said casing, catalytic area by catalytic area, using a tubular device according to claim 12.

14. The installation method according to the preceding claim, wherein :
within the external casing one installs catalytic areas support discs, bored in their central part to let central components pass through, and including a closeable opening of a size allowing the passage of a person,
one installs a part of an internal tubular wall provided with a double conduit corresponding to the lower catalytic area by securing the tube sections of said wall, each one provided with its respective filtering medium, in a crown on the external edge of the catalytic area support disc, the tube sections extending vertically, preferably equidistantly to each other, against the internal wall of the external casing, the filtering media being turned inwardly to the container,
and one continues the installation of the internal tubular wall by installing in the same way successively the tube sections of each catalytic area while going up towards the container top, the tube sections from one catalytic area to another being connected in a tight way by subsidiary connecting means, which preferably further provide vertical thermal dilation of sections.
